(19) Europäisches Patentamt
European Patent Office
Office européen des brevets

(11) Publication number: **0 112 038 B1**

(12) # EUROPEAN PATENT SPECIFICATION

(45) Date of publication of patent specification: **07.01.88**

(51) Int. Cl.⁴: **G 02 F 1/17**

(21) Application number: **83306874.5**

(22) Date of filing: **10.11.83**

(54) **A method of driving an electrochemical display device.**

(30) Priority: **26.11.82 JP 207371/82**

(43) Date of publication of application:
**27.06.84 Bulletin 84/26**

(45) Publication of the grant of the patent:
**07.01.88 Bulletin 88/01**

(84) Designated Contracting States:
**CH DE FR GB LI**

(56) References cited:
**EP-A-0 068 635**
**FR-A-2 441 895**
**GB-A-2 069 168**

**JOURNAL OF APPLIED PHYSICS, vol. 53, no. 1, January 1982, pages 804-805, American Institute of Physics, Washington, US; K.ITAYA et al.: "Prussian-blue-modified electrodes: An application for a stable electrochromic display device"**

(73) Proprietor: **SEIKO INSTRUMENTS INC.**
**31-1, Kameido 6-chome Koto-ku**
**Tokyo 136 (JP)**

(72) Inventor: **Sakuhara, Toshihiko c/o Seiko Instruments**
**Electronics Ltd. 21-1 Kameido 6-chome**
**Koto-ku Tokyo (JP)**
Inventor: **Shigeno, Masatsugu c/o Seiko Instruments**
**Electronics Ltd. 31-1 Kameido 6-chome**
**Koto-ku, Tokyo (JP)**

(74) Representative: **Caro, William Egerton et al**
**J. MILLER & CO. Lincoln House 296-302 High Holborn**
**London WC1V 7JH (GB)**

(56) References cited:
**JOURNAL OF THE ELECTROCHEMICAL SOCIETY, vol. 130, no. 1, January 1983, pages 249-251, Manchester, New Hampshire, US; D.W.DeBERRY et al.: "Photoelectrochromic behavior of prussian blue-modified TiO2 electrodes"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 112 038 B1

**Description**

This invention relates to methods of driving electrochemical display devices.

Prussian blue, which is an electrochromic material, changes from a coloured state to a bleached state according to the following electrochemical reaction formula:

$$\underset{\text{(blue)}}{Fe(III)_4[Fe(II)(CN)_6]_3}+4M^++4e^- \rightleftharpoons \underset{\text{(clear)}}{M_4Fe(II)_4[Fe(II)(CN)_6]_3} \quad (1)$$

wherein $M^+$ is a monovalent cation selected from the group consisting of $Li^+$, $Na^+$, $K^+$, $Rb^+$, $Cs^+$, $NH_4^+$, etc.

In the above reaction formula the left-hand substance is blue in colour and the right-hand substance is colourless. These substances undergo an electrochemically reversible redox reaction.

In a three electrode electrochemical display device using a Prussian blue coated working electrode, a counter electrode and a saturated calomel electrode (SCE) as a reference electrode, the working electrode is coloured by applying a voltage of about +0.6 volts with respect to the reference electrode and is bleached by applying a voltage of about −0.2 volts with respect to the reference electrode. Figure 3(B) is a cyclic voltammogram of a Prussian blue coated working electrode of such a three electrode electrochemical display device, the working electrode being immersed in a 1M KCl electrolyte solution (pH 4.0). The cyclic voltammagram has a peak of about +0.2 volts with respect to the reference electrode. The cyclic voltammogram shows that colouration of the working electrode is completed at about +0.6 volts relative to the reference electrode and bleaching of the working electrode is completed at about −0.2 volts relative to the reference electrode. It is, however, impossible to incorporate a saturated calomel electrode as a reference electrode in a practical electrochemical display device. A two electrode electrochemical display device consisting of a working electrode and a counter electrode is the most simple and most suitable for practical purposes. However, it is not known how to drive a two electrode electrochemical display device utilizing a Prussian blue coated working electrode and a Prussian blue coated counter electrode.

EP—A—0068635 discloses a method of driving an electrochromic display device which comprises applying to a working electrode with respect to a counter electrode a voltage of 0 volts for colouring and a voltage of −0.8 volts for bleaching. J. Appl. Phys. 53 (1982), pages 804—805 discloses an electrochromic display device having a three electrode system including a working electrode and a counter electrode having a coating of Prussian blue thereon.

According to the present invention there is provided a method of driving an electrochemical display device comprising a working electrode having a Prussian blue coating thereon, a counter electrode spaced from the working electrode and having a Prussian blue coating thereon, and an electrolyte in contact with the working electrode and the counter electrode, the method being characterised in that a colouration voltage that is not less than zero is applied to the working electrode with respect to the counter electrode in order to cause colouration of the working electrode, and a bleaching voltage which is in the range −0.4 volts to −0.7 volts is applied to the working electrode with respect to the counter electrode in order to cause bleaching of the working electrode.

In one embodiment a colouration voltage not less than +0.2 volts is applied to the working electrode with respect to the counter electrode in order to cause colouration of the working electrode.

Preferably a bleaching voltage which is not more than −0.6 volts is applied to the working electrode with respect to the counter electrode in order to cause bleaching of the working electrode.

In another embodiment a colouration voltage of about +0.2 volts is applied to the working electrode with respect to the counter electrode in order to cause colouration of the working electrode and a bleaching voltage of about −0.6 volts is applied to the working electrode with respect to the counter electrode in order to cause bleaching of the working electrode.

The invention is illustrated, merely by way of example, in the accompanying drawings, in which:—

Figure 1 shows a sectional view of an electrochemical display device for explaining one embodiment of a method according to the present invention;

Figure 2 shows graphically the change in electrode potential of a Prussian blue coated working electrode in 1MKCl aqueous electrolyte solution in terms of elapsed time;

Figure 3(A) is a cyclic voltammogram of a two electrode electrochemical display device;

Figure 3(B) is a cyclic voltammogram of a conventional three electrode electrochemical display device;

Figure 4 is a circuit diagram of a drive circuit for driving an electrochemical display device by another embodiment of a method according to the present invention;

Figure 5 shows the waveform of a drive signal applied to an electrochemical display device by a method according to the present invention;

Figure 6 shows graphically the characteristics of a method according to the present invention for driving an electrochemical display device, showing change of current and charge in response to change of drive voltage;

Figure 7 shows graphically the relationship between number of drive cycles and retention of a Prussian blue film when a Prussian blue coated working electrode is driven by the drive signal shown in Figure 5; and

Figure 8 shows the relationship between applied voltage induced in a working electrode with respect to a counter electrode of an electrochemical display device and *q* value for explaining a method according to the present invention.

Figure 1 shows an electrochemical display device for explaining an embodiment of a method according to the present invention for driving it. A transparent conductive film 2 for instance made of tin (IV) oxide is formed on a transparent display substrate 1 to act as a display or working electrode. The transparent conductive film is etched in a desired pattern. The regions of the transparent conductive film, other than the regions of lead electrodes and regions to be covered by a Prussian film 4, are coated with an insulating film 3 for instance made of silicon dioxide ($SiO_2$). The Prussian blue film 4 is then formed. An electrolytic solution is prepared consisting of an aqueous solution of 20 mM $Fe(ClO_4)_3$ whose pH is regulated to pH 2 by $CHlO_4$ and an aqueous solution of 20 mM $K_3Fe(CN)_6$ mixed together in a 1:1 volume ratio. The working electrode is immersed in this electrolytic solution. An electric current of 10 $\mu A/cm^2$ is applied to the working electrode so as to deposit the Prussian blue film. The charge density at the working electrode is set at about 9 $mC/cm^2$.

A counter electrode formed on a counter substrate 5 is formed in a similar manner to the working electrode, and like parts of the working electrode and the counter electrode are designated by the same reference numerals. The charge density of the Prussian blue film 4 of the counter electrode is set at 40 $mC/cm^2$. A background plate 6 is sandwiched between the display substrate and the counter substrate which are sealed together by a spacer 7. A 1 MKCl electrolyte solution whose pH is regulated to pH4 by HCl is disposed between the display substrate and the counter substrate.

Figure 2 shows graphically the change in electrode potential of a Prussian blue coated electrode in terms of elapsed time after keeping the potential level of the Prussian blue coated electrode at +0.6 volts for a time with respect to a saturated calomel electrode (SCE) as a reference electrode in a 1 MKCl aqueous solution whose pH is regulated to pH4 by HCl and after terminating the voltage applied to the Prussian blue coated electrode. The Prussian blue coated electrode used had a charge density of 14 $mC/cm^2$. The electrode potential of the Prussian blue coated electrode settled to 0.3 volts from about 0.45 volts with respect to the reference electrode after two hours.

Figure 3(A) is a cyclic voltammogram of a two electrode electrochemical display device and Figure 3(B) is a cyclic voltammogram of a conventional three electrode electrochemical display device. The abscissa in Figure 3(A) indicates the electrode potential of a Prussian blue coated working electrode with respect to a counter electrode. The abscissa in Figure 3(b) indicates the electrode potential of a Prussian blue coated working electrode with respect to a saturated calomel electrode as a reference electrode. In the electrochemical display device the colouration of the Prussian blue coated working electrode is completed at about +0.6 volts with respect to the reference electrode and bleaching is completed at about −0.2 volts with respect to the reference electrode.

In a three electrode electrochemical display device, the electrode potential of the working electrode is determined with respect to the reference electrode while in a two electrode electrochemical display device the electrode potential of the working electrode is determined with respect to the counter electrode. The electrode potential of the counter electrode having a Prussian blue coating thereon is considered to be at +0.3 volts to about +0.45 volts with respect to the reference electrode as indicated in Figure 2.

When in the electrochemical display device of Figure 1 a voltage of about +0.2 volts, which is given by subtracting the electrode potential of the counter electrode with respect to the reference electrode from the electrode potential of the working electrode in the coloured state with respect to the reference electrode, is applied to the working electrode with respect to the counter electrode, the reaction represented by the reaction formula above almost completely goes to the left and the working electrode is coloured blue. When a voltage of about −0.6 volts which is given by subtracting the electrode potential of the counter electrode from the electrode potential of the working electrode in the bleached state, is applied to the working electrode with respect to the counter electrode, the reaction represented by the reaction formula above goes to the right and the working electrode becomes colourless. The cyclic voltammogram shown in Figure 3(A) illustrates this and the redox reaction has a peak current at about +0.1 volts and colouration is completed at about +0.2 volts and the bleaching is completed at about −0.6 volts. The scan rate of the applied voltage is 20 mV/S in the case of Figure 3(A) and is 50 mV/S in the case of Figure 3(B).

Figure 4 shows a drive circuit for driving the electrochemical display device of Figure 1. The counter electrode is connected to ground potential. Variable resistors 10 are connected in parallel across two direct current power supplies 9 respectively so that any given voltage can be developed by the resistors 10. The output voltages of the two power supplies 9 are selectively connected to the working electrode through a switch 11. The switch 11 operates to switch between the coloured state and the bleached state of the working electrode.

Figure 5 shows a preferred embodiment of the waveform of a drive signal applied to the electrochemical display device of Figure 1 by a method according to the present invention. A voltage of +0.2 volts is applied to the working electrode for causing colouration thereof and a voltage of −0.6 volts is applied to the working electrode for causing bleaching thereof. $t_0$ denotes the time interval during which the drive voltage is applied to the working electrode and which may be set at various values.

Figure 6 shows graphically change of an electric current and change of electric charge observed at the working electrode in response to the voltage of the drive signal which is initially held at +0.2 volts for

colouring the working electrode. The size of the working electrode used in this case was 4 $mm^2$ and the electric charge density of the working electrode was 8 $mC/cm^2$. Response time is defined by the time interval for moving 90% of the total electric charge to or from the working electrode. The response time is about 0.6 seconds for bleaching the working electrode and about 0.9 seconds for colouring the working electrode. Figure 7 shows the relationship between the stability of a Prussian blue film which is measured by the retention of the Prussian blue film and a number of drive cycles where the drive signal is so arranged that a voltage of +0.2 volts is applied for 2 seconds to cause colouration of the working electrode and then a voltage of −0.6 volts is applied for 2 seconds to cause bleaching of the working electrode and then this set of drive voltages are repeated. The retention of the film is defined as:

$$\text{The retention of the film} = \frac{\text{Charge of Prussian blue film after predetermined number of drive cycles}}{\text{Initial charge of Prussian blue film}}. \qquad (1)$$

The retention of the Prussian blue film indicates the reduced charge of the Prussian blue film after a predetermined number of drive cycles with respect to the initial charge. The retention of the film indicates the degree of deterioration of the Prussian blue film. In Figure 7 a circle indicates a mean value of 20 test cells. The vertical line passing through the circles indicates the maximum value and the minimum value. Even after $10^5$ cycles the test cells were found to operate stably.

Another embodiment of a method according to the present invention for driving an electrochemical display device of the previous embodiment will be described. A voltage of 0 volts is applied to the working electrode with respect to the counter electrode for causing colouration of the working electrode and a voltage of −0.4 volts is applied to the working electrode with respect to the counter electrode for causing bleaching of the working electrode. Figure 8 shows the relationship between the voltage applied to the working electrode with respect to the counter electrode and *q* value. The *q* value is defined by the following equation:

$$q(\%) = \frac{QVo}{Q-0.6} \times 100 \qquad (2)$$

where:

QVo is the charge flowing through the working electrode when the applied voltage is changed from +0.2 volts to Vo volts and,

Q−0.6 is the charge flowing through the working electrode when the applied voltage is changed from +0.2 volts to −0.6 volts.

According to equation (2) when the voltage of +0.2 volts is applied to the working electrode and thus the reaction formula above goes completely to the left the *q* value is 0%. When a voltage of −0.6 volts is applied to the working electrode and thus the reaction formula goes completely to the right and the working electrode is colourless the *q* is 100%. Thus the *q* value indicates the degree of the reaction rate from left to right in the reaction formula. The *q* value is 15% when a voltage of 0 volts is applied to the working electrode for causing colouration of the working electrode. The *q* value is 95% when a voltage of −0.4 volts is applied to the working electrode for bleaching the working electrode. In this state the working electrode is not completely colourless but clear enough for practical operation of an electrochemical display device even at a voltage of −0.4 volts.

Another embodiment of a method according to the present invention utilises the same electrochemical display device as shown in Figure 4. This electrochemical display device is driven by a colouring voltage of +0.3 volts and a bleaching voltage of −0.4 volts. As seen from Figure 8, the reaction formula goes to the left when a voltage of +0.3 volts is applied to the working electrode as well as the voltage of 0.2 volts. When a voltage of −0.4 volts is applied to the working electrode the *q* value is 95%. Thus the working electrode is not completely colourless but is sufficiently clear for practical purposes.

A yet further embodiment according to the present invention utilises the electrochemical display device of Figure 4. A colouring voltage of 0 volts and a bleaching voltage of −0.7 volts are applied to the working electrode so as to drive the electrochemical display device. When the colouring voltage is 0 volts, the *q* value is about 15%. When the bleaching voltage is −0.7 volts the *q* value is 100%. Thus the working electrode is completely colourless in the bleached state and not fully coloured in the coloured state.

The methods according to the present invention and described above enable a two electrode electrochemical display device which consists of a Prussian blue coated working electrode and a Prussian blue coated counter electrode to be stably driven so that a relatively long operational life is achieved. The structure of the electrochemical display device is relatively simple because the same electrochromic material is used for both the working electrode and the counter electrode.

**Claims**

1. A method of driving an electrochemical display device comprising a working electrode (1, 2) having

a Prussian blue coating (4) thereon, a counter electrode (5, 2) spaced from the working electrode and having a Prussian blue coating (4) thereon, and an electrolyte (8) in contact with the working electrode and the counter electrode, the method being characterised in that a colouration voltage that is not less than zero is applied to the working electrode (1, 2) with respect to the counter electrode (5, 2) in order to cause colouration of the working electrode, and a bleaching voltage which is in the range −0.4 volts to −0.7 volts is applied to the working electrode (1, 2) with respect to the counter electrode (5, 2) in order to cause bleaching of the working electrode.

2. A method as claimed in Claim 1, characterised in that a colouration voltage not less than +0.2 volts is applied to the working electrode (1, 2) with respect to the counter electrode (5, 2) in order to cause colouration of the working electrode.

3. A method as claimed in Claim 1 or 2, characterised in that a bleaching voltage which is not more than −0.6 volts is applied to the working electrode (1, 2) with respect to the counter electrode (5, 2) in order to cause bleaching of the working electrode.

4. A method as claimed in Claim 1, in which a colouration voltage of about +0.2 volts is applied to the working electrode (1, 2) with respect to the counter electrode (5, 2) in order to cause colouration of the working electrode and a bleaching voltage of about −0.6 volts is applied to the working electrode (1, 2) with respect to the counter electrode (5, 2) in order to cause bleaching of the working electrode.

5. A method as claimed in Claim 1, in which a colouration voltage of about +0.3 volts is applied to the working electrode (1, 2) with respect to the counter electrode (5, 2) in order to cause colouration of the working electrode and a bleaching voltage of about −0.7 volts is applied to the working electrode (1, 2) with respect to the counter electrode (5, 2) in order to cause bleaching of the working electrode.

6. A method as claimed in Claim 1, in which a colouration voltage of about 0.0 volts is applied to the working electrode (1, 2) with respect to the counter electrode (5, 2) in order to cause colouration of the working electrode and a bleaching voltage of about −0.4 volts is applied to the working electrode (1, 2) with respect to the counter electrode (5, 2) in order to cause bleaching of the working electrode.

**Patentansprüche**

1. Verfahren zur Ansteuerung einer elektromechanischen Anzeigeeinrichtung mit einer eine Beschichtung (4) aus preusisch blau aufweisenden Arbeitselektrode (1, 2), einer von der Arbeitselektrode beabstandeten und eine Beschichtung (4) aus preusisch blau aufweisenden Gegenelektrode (5, 2) und einem mit der Arbeitselektrode und der Gegenelektrode in Kontakt stehenden Elektrolyten (8), dadurch gekennzeichnet, daß an die Arbeitselektrode (1, 2) in Bezug auf die Gegenelektrode (5, 2) eine Färbungsspannung angelegt wird, um eine Verfärbung der Arbeitselektrode zu bewirken, und daß an die Arbeitselektrode (1, 2) in Bezug auf die Gegenelektrode (5, 2) eine im Bereich von −0,4 bis 0,7 V liegende Entfärbungsspannung angelegt wird, um die Arbeitselektrode zu entfärben.

2. Verfahren nach Anspruch 1, dadurch gekennzeichnet, daß an die Arbeitselektrode (1, 2) in Bezug auf die Gegenelektrode (5, 2) eine Färbungsspannung angelegt wird, welche nicht kleiner als +0,2 V ist, um eine Färbung der Arbeitselektrode zu bewirken.

3. Verfahren nach Anspruch 1 oder 2, dadurch gekennzeichnet, daß an die Arbeitselektrode (1, 2) in Bezug auf die Gegenelektrode (5, 2) eine Entfärbungsspannung angelegt wird, welche nicht größer als −0.6 V ist, um eine Entfärbung der Arbeitselektrode zu bewirken.

4. Verfahren nach Anspruch 1, bei dem an die Arbeitselektrode (1, 2) in Bezug auf die Gegenelektrode (5, 2) eine Färbungsspannung von etwa +0,2 V angelegt wird, um eine Verfärbung der Arbeitselektrode zu bewirken, und an die Arbeitselektrode (1, 2) in Bezug auf die Gegenelektrode (5, 2) eine Entfärbungsspannung von etwa −0,6 V angelegt wird, um eine Entfärbung der Arbeitselektrode zu bewirken.

5. Verfahren nach Anspruch 1, bei dem an die Arbeitselektrode (1, 2) in Bezug auf die Gegenelektrode (5, 2) eine Färbungsspannung von etwa +0,3 V angelegt wird, um eine Verfärbung der Arbeitselektrode zu bewirken, und an die Arbeitselektrode (1, 2) in Bezug aif die Gegenelektrode (5, 2) eine Entfärbungsspannung von etwa −0,7 V angelegt wird, um ein Entfärben der Arbeitselektrode zu bewirken.

6. Verfahren nach Anspruch 1, bei dem an die Arbeitselektrode (1, 2) in Bezug auf die Gegenelektrode (5, 2) eine Färbungsspannung von etwa 0,0 V angelegt wird, um eine Färbung der Arbeitselektrode zu bewirken, und an die Arbeitselektrode (1, 2) in Bezug auf die Gegenelektrode (5, 2) eine Entfärbungsspannung angelegt wird, um eine Entfärbung der Arbeitselektrode zu bewirken.

**Revendications**

1. Procédé pour commander un dispositif d'affichage électrochimique comprenant une électrode de travail (1, 2) portant un revêtement du bleu de Prusse (4), une contre-électrode (5, 2) espacée de l'électrode de travail et portant un revétement de bleu de Prusse (4), ainsi qu'un électrolyte (8) en contact avec l'électrode de travail et la contre-électrode, caractérisé en ce qu'il consiste à appliquer à l'électrode de travail (1, 2) une tension de coloration qui n'est pas inférieure à zéro, par rapport à la contre-électrode (5, 2), pour produire la coloration de l'électrode de travail, et à appliquer à l'électrode de travail (1, 2) une tension

de blanchiment ou de décoloration comprise entre −0,4 et −0,7 V, par rapport à la contre-électrode (5, 2), pour produire le blanchiment de l'électrode de travail.

2. Procédé selon la revendication 1, caractérisé en ce que la tension de coloration appliquée à l'électrode de travail (1, 2) pour produire sa coloration n'est pas inférieure à +0,2 V par rapport à la contre-électrode (5, 2).

3. Procédé selon la revendication 1 ou 2, caractérisé en ce que la tension de blanchiment appliquée à l'électrode de travail (1, 2) pour produire son blanchiment n'est pas supérieure à −0,6 V par rapport à la contre-électrode (5, 2).

4. Procédé selon la revendication 1, dans lequel la tension de coloration appliquée à l'électrode de travail (1, 2) pour produire sa coloration est d'environ +0,2 V par rapport à la contre-électrode (5, 2) et la tension de blanchiment appliquée à l'électrode de travail (1, 2) pour produire son blanchiment est d'environ −0,6 V par rapport à la contre-électrode (5, 2).

5. Procédé selon la revendication 1, dans lequel la tension de coloration appliquée à l'électrode de travail (1, 2) pour produire sa coloration est d'environ +0,3 V par rapport à la contre-électrode (5, 2) et la tension de blanchiment appliquée à l'électrode de travail (1, 2) pour produire son blanchiment est d'environ −0,7 V par rapport à la contre-électrode (5, 2).

6. Procédé selon la revendication 1, dans lequel la tension de coloration appliquée à l'électrode de travail (1, 2) pour produire sa coloration est d'environ 0,0 V par rapport à la contre-électrode (5, 2) et la tension de blanchiment appliquée à l'électrode de travail (1, 2) pour produire son blanchiment est d'environ −0,4 V par rapport à la contre-électrode (5, 2).

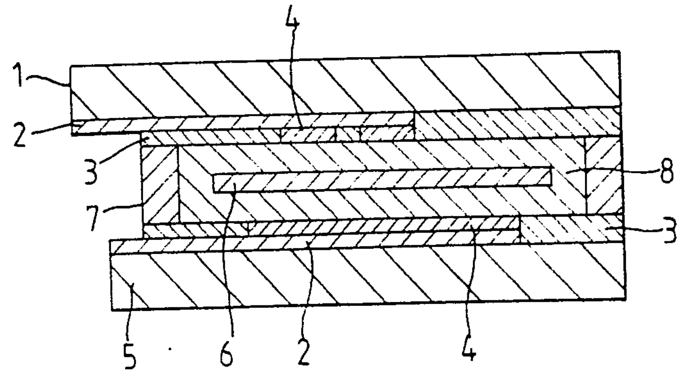


Fig.1.

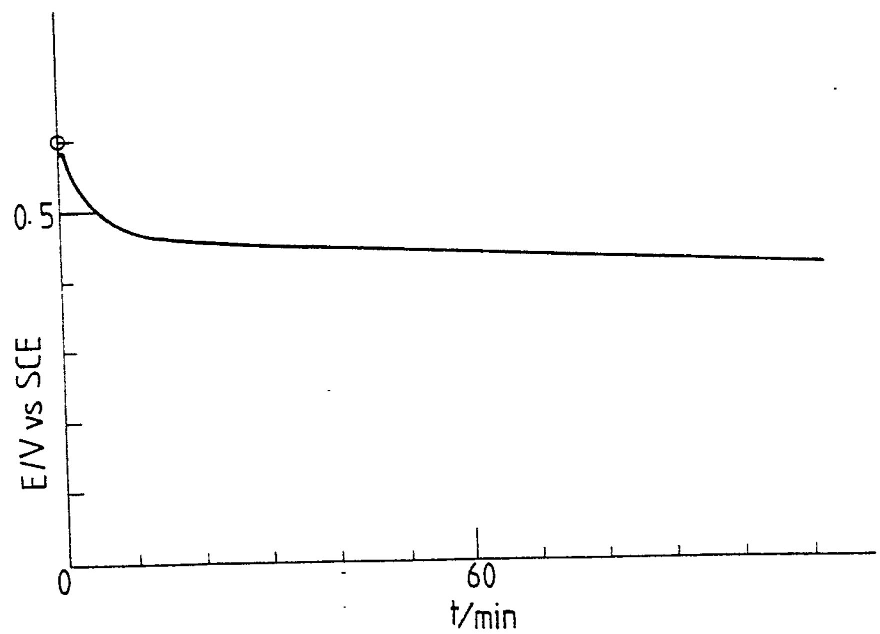


Fig.2.

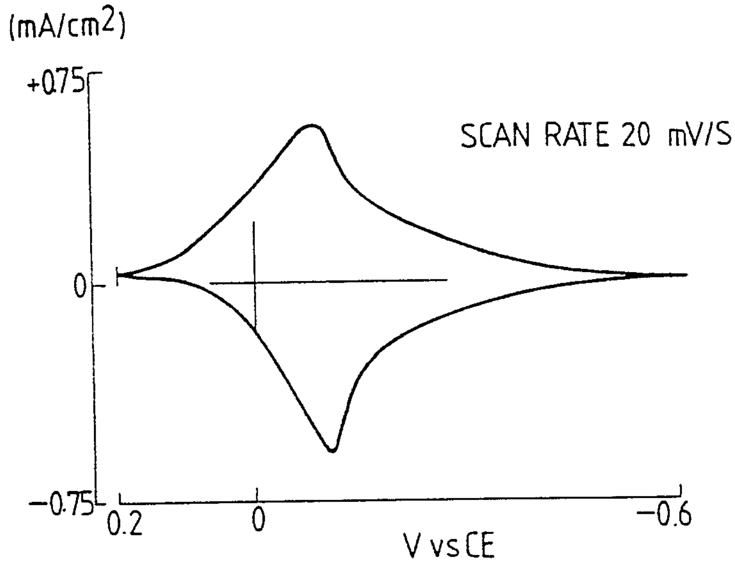
(mA/cm2)
+0.75
0
−0.75
SCAN RATE 20 mV/S
0.2
0
−0.6
V vs CE

*Fig. 3A.*

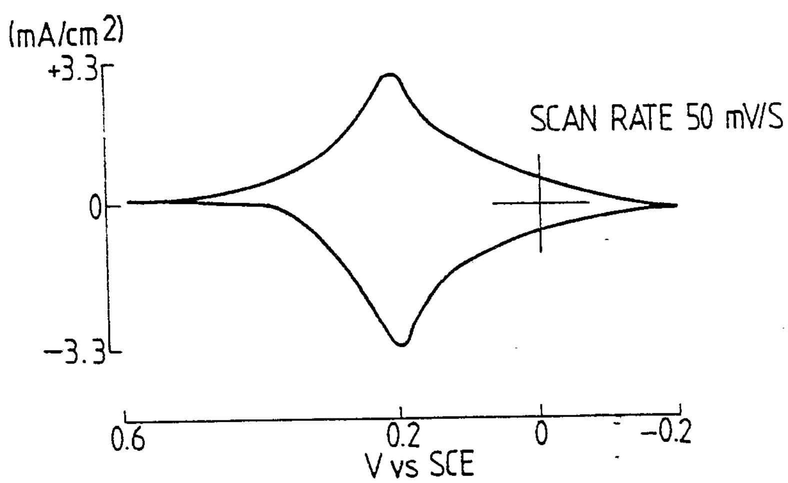
(mA/cm 2)
+3.3
0
−3.3
SCAN RATE 50 mV/S
0.6
0.2
0
−0.2
V vs SCE

*Fig. 3B.*

Fig.4.

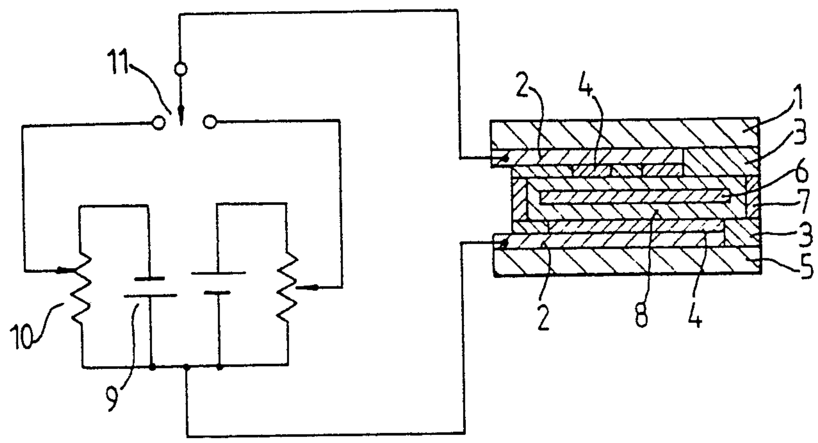


Fig.5.

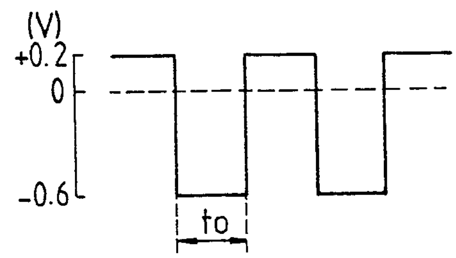


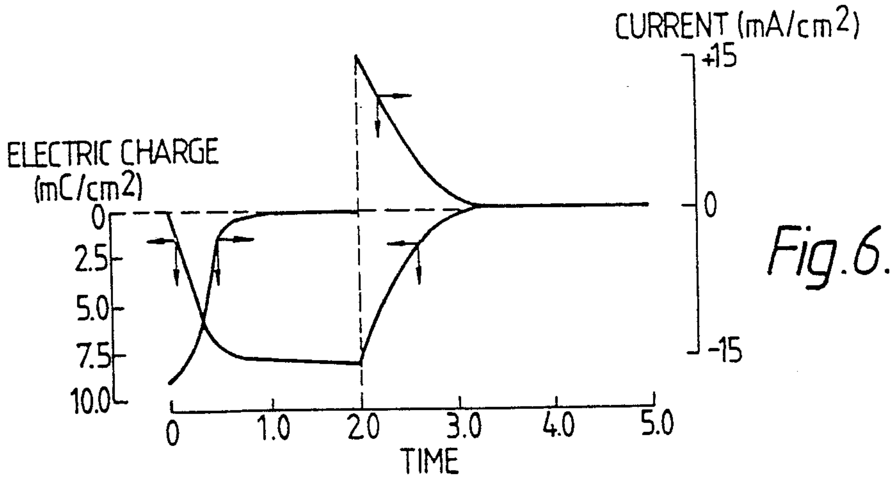


Fig.6.

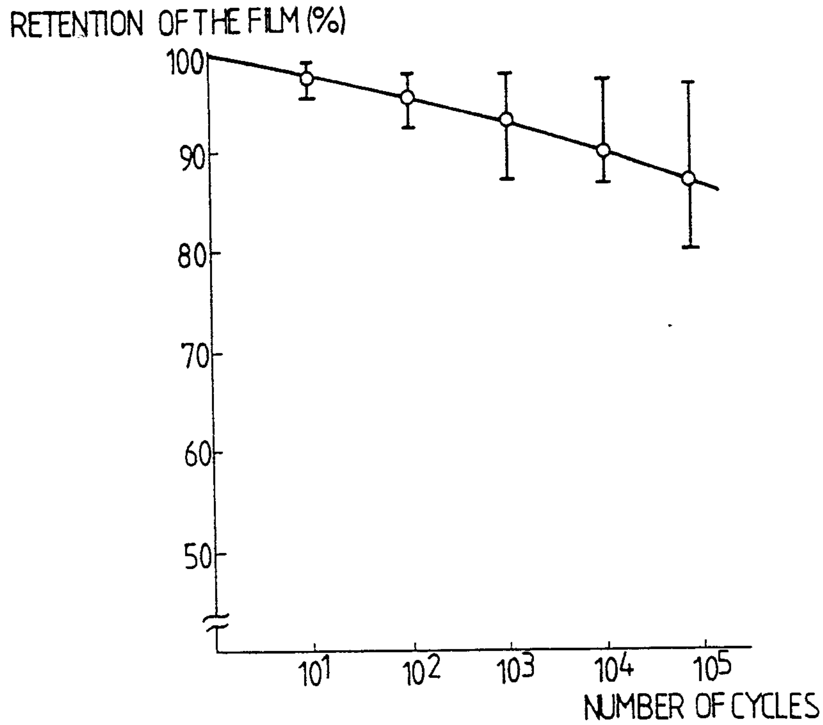
RETENTION OF THE FILM (%)
100
90
80
70
60
50
$10^1$
$10^2$
$10^3$
$10^4$
$10^5$
NUMBER OF CYCLES

Fig. 7.

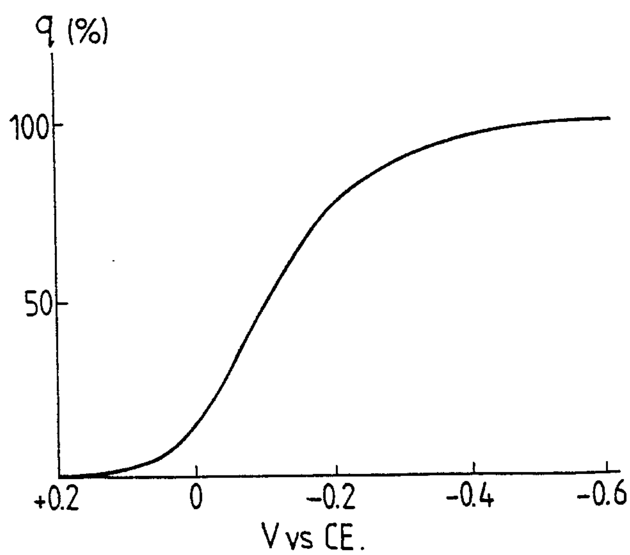
q (%)
100
50
+0.2
0
-0.2
-0.4
-0.6
V vs CE.

Fig. 8.